# EUROPÄISCHE PATENTSCHRIFT

(11) **EP 3 557 105 B1**
(45) Veröffentlichungstag und Bekanntmachung des Hinweises auf die Patenterteilung: **20.03.2024**
(21) Anmeldenummer: 19169756.4
(22) Anmeldetag: 17.04.2019
(51) Int. Cl.: F16K 31/60, F16K 31/05

(54) **STELLANTRIEB UND VERFAHREN ZUR BEDIENUNG EINES STELLANTRIEBES**
POSITIONING DRIVE AND METHOD FOR OPERATING SAME
ACTIONNEUR ET PROCÉDÉ DE FONCTIONNEMENT D'UN ACTIONNEUR

(30) Priorität: 19.04.2018 DE 102018109399
(43) Veröffentlichungstag der Anmeldung: 23.10.2019
(73) Patentinhaber: AUMA Riester GmbH & Co. KG, 79379 Müllheim (DE)
(72) Erfinder: Sakautzky, Arnd, 78658 Zimmern (DE)
(74) Vertreter: Mertzlufft-Paufler, Cornelius

(56) Entgegenhaltungen:
- US-A1- 2004 045 608
- US-A1- 2006 081 800
- US-A1- 2008 054 209
- US-A1- 2017 275 860

## Beschreibung

Die Erfindung betrifft einen Stellantrieb mit einer Abtriebswelle zur Betätigung eines Ventils, mit einer Motorantriebseinheit und mit einem Handantriebselement, wobei die Abtriebswelle wahlweise mit der Motorantriebseinheit oder dem Handantriebselement betätigbar ist.

Weiter betrifft die Erfindung ein Verfahren zur Bedienung eines Stellantriebes zur Betätigung eines Ventils und die Verwendung eines entkoppelten Handantriebselements eines Stellantriebes zur Bedienung des Stellantriebes.

Stellantriebe der eingangs genannten Art sind bereits bekannt. Sie sind in der Regel dazu eingerichtet, ein Ventil zwischen einer Offen- und einer Verschlussposition zu verstellen. Unter normalen Anwendungsbedingungen erfolgt eine Ventilbetätigung dabei mittels der Motorantriebseinheit. Kommt es jedoch beispielsweise zu einem Stromausfall oder einem sonstigen Betriebsversagen der Motorantriebseinheit, so kann das Ventil ersatzweise durch manuelle Betätigung des Handantriebselements verstellt werden.

Die Steuerung der Motorantriebseinheit erfolgt bei derartigen Stellantrieben über Tastaturen oder ähnliche, insbesondere als Tastenbedienelemente ausgestaltete Eingabeeinheiten. Ein Benutzer kann dadurch Befehle zur Steuerung des Ventils am Stellantrieb eingeben, die dann durch eine Rechnereinheit verarbeitet und an die Motorantriebseinheit weitergeleitet werden.

Die Verwendung von Tastaturen oder ähnlichen Tastenbedienelementen ist jedoch nachteilig, da dadurch die Fertigungskosten eines Stellantriebes maßgeblich in die Höhe getrieben werden. Zudem stellen sie ein Risiko für die erwünschte Dichtigkeit eines Gehäuses des Stellantriebes dar, da sie in das Gehäuse integriert und/oder in Gehäusedurchbrüchen eingesetzt sind. Dies hat zur Folge, dass zusätzlich Dichtelemente erforderlich sind, um das Gehäuse möglichst dicht abzuschließen.

Ein weiterer Nachteil derartiger Stellantriebe besteht darin, dass die Stellantriebe häufig an relativ staub- und/oder schmutzbelasteten Orten zum Einsatz kommen. Dies kann zur Folge haben, dass auch die Tastbedienelemente verschmutzt werden, was im schlimmsten Falle zu einem Defekt der Tastbedienelemente und zumindest zum vorübergehenden Ausfall des Stellantriebes führen kann.

Amtsseitig wurden die Dokumente (amtsseitig als Dokument D1 bezeichnet) und US 2004/045608 A1 (amtsseitig als Dokument D2 bezeichnet) als den Gegenständen des ursprünglichen Schutzbegehrens entgegenstehend betrachtet.

Die US 2006/081800 A1 betrifft einen Stellantrieb für ein Ventil zur Prozessautomatisierung. Der Stellantrieb weist ein Handrad auf, durch welches die Abtriebswelle antreibbar ist.

Die Vorrichtung weist einen Kupplungsmechanismus auf, der dazu eingerichtet ist, zu verhindern, dass eine Kraftübertragung auf das Handrad möglich ist, wenn mit dem Elektromotor angetrieben wird.

US 2004/045608 A1 betrifft eine Ventilhandhabe beispielsweise für eine Gasflasche, wobei hier die Problematik gelöst werden soll, dass Patienten, die beispielsweise mit Lachgas behandelt werden müssen, unterschiedlich lange begast werden müssen, um eine gewünschte Wirkung zu erzielen. Um die Abrechnung einer solchen Gasbehandlung verbessern zu können, soll die tatsächliche zeitabhängige Menge eines zur Begasung eingesetzten Gases genauer erfasst werden. Hierzu weist die Ventilhandhabe wenigstens einen Sensor auf, durch welchen erkannt wird, wenn das Ventil geöffnet ist. Mittels des Sensors kann dann eine Stoppuhr angeschaltet werden, durch die eine Dauer der Behandlung aufgezeichnet wird. Sobald das Ventil geschlossen wird, wird die Stoppuhr angehalten.

Es besteht daher die Aufgabe, einen Stellantrieb der eingangs genannten Art bereitzustellen, bei welchem die genannten Nachteile nicht auftreten.

Zur Lösung dieser Aufgabe werden bei einem Stellantrieb der eingangs genannten Art die Merkmale gemäß Anspruch 1 vorgeschlagen. Insbesondere wird somit ein Stellantrieb der eingangs genannten Art vorgeschlagen, der wenigstens einen Sensor aufweist, mit dem eine Drehbewegung des Handantriebselements um eine Drehachse erfassbar ist. Durch die Erfassung der Drehbewegung ist es somit möglich, die Bedienbarkeit eines Stellantriebes der genannten Art zu verbessern und die Herstellung zu vereinfachen. Durch die Erfassung der Drehbewegung ist es nämlich möglich, auf Tastaturen und ähnliche Eingabeelemente insbesondere zur Eingabe von Steuerbefehlen größtenteils oder vollständig zu verzichten. Der Benutzer kann also durch eine Betätigung des Handantriebselements Steuerungsbefehle zur Betätigung des Ventils durch die Motorantriebseinheit eingeben und braucht dies nicht länger über Tastfelder zu tun. Somit kann zudem ein Gehäuse des Stellantriebes einfacher abgedichtet werden und Ausfälle insbesondere aufgrund eines durch eine Verschmutzung herbeigeführten Defekts der Eingabeelemente besser vermieden oder verhindert werden. Insbesondere kann es zur Erfassung der Drehbewegung vorgesehen sein, dass mit dem wenigstens einen Sensor zumindest Bewegungen in zwei Raumachsen erfassbar sind. Vorzugsweise kann zur Erfassung einer Bewegung in einer Raumachse jeder Raumachse jeweils ein Sensor zugeordnet sein. Ebenso kann es vorgesehen sein, dass zur Erfassung der Drehbewegung ein Sensor und zur Erfassung einer Axialbewegung ein weiterer Sensor vorgesehen sein kann.

Zwar sind bereits Stellantriebe bekannt, bei welchen eine axiale Einkupplungsbewegung eines Handantriebselements erfassbar ist. Allerdings ist es anhand der dazu vorgesehenen Sensoren nicht möglich, eine Drehbewegung des Handantriebselements zu erfassen, insbesondere um daraus einen durch den Benutzer eingegebenen Befehl zu erkennen und diesen an die Motorantriebseinheit zu übergeben. Die Erfassung einer axialen Einkupplungsbewegung dient bisher lediglich dazu, erkennen zu können, ob ein Handantriebselement in einer Einkupplungsstellung vorliegt. Dies dient dem Zweck, dass kein gleichzeitiger Antrieb durch die Motorantriebseinheit und das Handantriebselement erfolgen kann, was unter Umständen zu einer Verletzung eines Benutzers durch das Handantriebselement führen könnte. Liegt das Handantriebselement somit in einer Einkuppelstellung vor, so wird die Motorantriebseinheit abgeschalten oder inaktiviert. So kann kein versehentlicher Antrieb des Handantriebselements durch die Motorantriebseinheit erfolgen, solange das Handantriebselement eingekuppelt ist.

Um eine Verstellung des Handantriebselements in axialer Richtung ebenfalls zur Erfassung einer Eingabe des Benutzers nutzen zu können, kann gemäß einer vorteilhaften Weiterbildung vorgesehen sein, dass mit dem wenigstens einen Sensor und/oder mit wenigstens einem weiteren Sensor zusätzlich eine axiale Bewegung des Handantriebselements entlang einer Längsachse des Handantriebselements erfassbar ist. Die Erfassung einer axialen Bewegung des Handantriebselements kann insbesondere als Eingabebestätigung oder Quittierung interpretiert werden.

Besonders zweckmäßig kann es somit sein, alle Freiheitsgrade der Handantriebseinheit mittels des wenigstens einen Sensors zu erfassen und zur Generierung eines Befehls auszuwerten. Somit kann es also insbesondere vorgesehen sein, dass mittels des wenigstens einen Sensors Bewegungen in drei Raumachsen erfassbar sind. Vorzugsweise kann dabei zur Bewegungserfassung in jeder Raumachse jeweils wenigstens ein Sensor vorgesehen sein.

Um eine Bewegung des Handantriebselements möglichst genau erfassen zu können, kann zwischen wenigstens einem Detektionselement, welches an dem Handantriebselement ausgebildet ist oder mit dem Handantriebselement verbunden ist, und dem wenigstens einen Sensor und/oder einem oder dem weiteren Sensor eine Wirkverbindung eingerichtet sein. Eine geeignete Wirkverbindung kann beispielsweise als eine Wirkverbindung ausgewählt aus induktive, optische und/oder magnetische Wirkverbindung sein. Das Handantriebselement kann eine Handantriebswelle aufweisen oder mit einer Handantriebswelle verbunden sein, die bei einer Betätigung des Handantriebselements mitbewegbar ist, insbesondere mitdrehbar ist. Vorzugsweise ist das Detektionselement an der Handantriebswelle des Handantriebselements angeordnet, so dass auch das Detektionsmittel bei einer Betätigung des Handantriebselements mitbewegbar ist. Besonders zweckmäßig kann es sein, wenn die Handantriebswelle, insbesondere im Falle einer magnetischen Wirkverbindung, aus einem nichtmagnetischen und/oder nicht-magnetisierbaren Material hergestellt ist.

Gemäß einer weiteren vorteilhaften Ausgestaltung kann der wenigstens eine Sensor und/oder ein oder der bereits zuvor genannte weitere Sensor jeweils zur Durchführung einer Messungsart oder einer Kombination aus mehreren Messungsarten ausgewählt aus der Gruppe aus magnetische, optische und/oder induktive Messung eingerichtet sein.

Besonders bevorzugt kann der wenigstens eine Sensor und/oder ein oder der bereits zuvor genannte weitere Sensor jeweils zumindest als ein Sensor ausgewählt aus der Gruppe aus magnetischer Hallsensor, phasenverschobene Reflexlichtschranken, phasenverschobene Gabellichtschranken und/oder induktiver Sensor ausgestaltet sein. Die Verwendung eines Hallsensors oder eines induktiven Sensors kann den Vorteil haben, dass Verschmutzungen, insbesondere im Gehäuseinneren des Stellantriebes, die beispielsweise durch Schmiermittel oder dergleichen entstehen können, nicht die Erfassung der Bewegungen des Handantriebselements beeinträchtigen.

Besondere Vorteile kann insbesondere die Ausgestaltung als magnetischer 3D-Hallsensor aufweisen, da es auf diese Weise möglich ist, alle Bewegungsfreiheitsgrade des Handantriebselements mit einem Sensor zu erfassen.

Um eine erfasste Drehbewegung des Handantriebselements in einen Befehl umwandeln zu können, kann/können der wenigstens eine Sensor und/oder ein oder der bereits genannte weitere Sensor mit einer Rechnereinheit gekoppelt sein. Dabei kann es besonders zweckmäßig sein, wenn der wenigstens eine Sensor und/oder der weitere Sensor mit einer Rechnereinheit elektronisch gekoppelt ist/sind. Durch eine Betätigung des Handantriebselements kann so ein Befehl generierbar sein. Um eine schnelle Weiterleitung und Umsetzung des Befehls zu ermöglichen, kann die Rechnereinheit mit der Motorantriebseinheit gekoppelt sein, insbesondere elektronisch gekoppelt, sein, wobei die Motorantriebseinheit durch die Rechnereinheit steuerbar ist.

Ein Befehl im Sinne der Erfindung kann beispielsweise eine Parametereinstellung und/oder ein Verstellungsbefehl und/oder ein Steuerbefehl sein.

Wie bereits zuvor ausgeführt wurde, kann es zur Vermeidung von Verletzungen eines Benutzers vorteilhaft sein, wenn zwischen dem Handantriebselement, insbesondere zwischen einer oder der bereits genannten Handantriebswelle, und einer Abtriebswelle des Stellantriebs eine Kupplungsvorrichtung angeordnet ist. Die Kupplungsvorrichtung kann als mechanische Kupplungsvorrichtung ausgestaltet sein. Vorzugsweise kann die Kupplungsvorrichtung als eine formschlüssige Kupplung ausgestaltet sein.

Um eine versehentliche Fehlbedienung des Stellantriebes durch einen Benutzer vermeiden zu können, insbesondere wenn der Benutzer die Motorantriebseinheit nicht bedienen möchte, sondern eine manuelle Betätigung des Ventils durch das Handantriebselement vornehmen möchte, kann es gemäß einer besonders vorteilhaften Weiterbildung vorgesehen sein, dass eine Drehbewegung des Handantriebselements nur bei ausgekuppeltem Handantriebselement durch den wenigstens einen Sensor erfassbar ist und/oder daraus ein Befehl generiert wird. Beispielsweise kann dies dadurch erreicht sein, dass eine oder die zuvor bereits genannte Wirkverbindung zwischen dem wenigstens einen Sensor und dem Detektionselement nur bei ausgekuppeltem Handantriebselement eingerichtet ist. Entsprechend kann also vorgesehen sein, dass im eingekuppelten Zustand des Handantriebselements keine Wirkverbindung zwischen dem Sensor und dem Detektionselement eingerichtet ist. Der Stellantrieb befindet sich so also nur bei Vorliegen einer Auskupplungsstellung der Kupplungsvorrichtung in einem Bedienmodus, in welchem ein Benutzer Befehle eingeben kann.

Um die Bedienbarkeit des Stellantriebs für einen Benutzer weiter zu vereinfachen, kann eine durch den wenigstens einen Sensor und/oder einen oder den bereits genannten weiteren Sensor erfasste Bewegung des Handantriebselements durch eine oder die Rechnereinheit als Bestätigungsbefehl für einen ausgewählten oder eingegebenen Befehl interpretierbar sein. Der Benutzer kann somit durch eine insbesondere vordefinierte oder definierbare Bewegung des Handantriebselements eine zuvor gemachte Eingabe bestätigen oder quittieren. Besonders vorteilhaft kann es dabei sein, wenn es sich bei dieser Bewegung um eine axiale Bewegung des Handantriebselements entlang einer Längsachse handelt. Dabei kann es sich beispielsweise um eine Bewegung handeln, die bei einem Ein- oder Auskupplungsvorgang des Handantriebselements vorgenommen wird.

Alternativ oder ergänzend dazu kann es gemäß einer weiteren möglichen Ausgestaltung vorgesehen sein, dass der Stellantrieb eine weitere Eingabeeinheit, insbesondere zumindest eine Taste, aufweist, wobei durch Betätigen der Eingabeeinheit ein Bestätigungsbefehl für einen ausgewählten oder eingegebenen Befehl generierbar ist.

Gemäß einer vorteilhaften Ausgestaltung der Erfindung kann es vorgesehen sein, dass das Handantriebselement als ein oder das bereits genannte Detektionselement wenigstens einen Magneten aufweist oder mit wenigstens einem Magneten verbunden ist, wobei zwischen dem wenigstens einen Magnet und dem wenigstens einen Sensor und/oder dem weiteren Sensor eine magnetische Wirkverbindung einrichtbar oder eingerichtet ist, über welche eine Bewegung des Handantriebselements, insbesondere eine Bewegung in den drei Raumachsen, erfassbar ist. Der Magnet kann dabei als Permanentmagnet und/oder Elektromagnet ausgestaltet sein. Vorzugsweise kann der wenigstens eine Magnet als ein Ringmagnet und/oder als ein Stabmagnet ausgestaltet sein. Somit kann zumindest ein spezieller magnetischer Hallsensor, insbesondere 3D-Hallsensor, ausgestaltet werden.

Gemäß einer weiteren vorteilhaften Ausgestaltung der Erfindung, kann es vorgesehen sein, dass das Handantriebselement als ein oder das bereits zuvor genannte Detektionselement wenigstens einen Reflektor aufweist oder mit wenigstens einem Reflektor verbunden ist. Vorzugsweise weist das Handantriebselement wenigstens zwei um einen Phasenwinkel verschobene Reflektoren auf. Über den Reflektor oder die Reflektoren kann/können jeweils eine als Lichtschranke ausgebildete optische Wirkverbindung zu jeweils einem Sensor eingerichtet werden. Somit kann/können zumindest eine spezielle Reflexlichtschranke, vorzugsweise zwei phasenverschobene Reflexlichtschranken, ausgebildet werden.

Gemäß einer weiteren vorteilhaften Ausgestaltung der Erfindung kann es vorgesehen sein, dass das Handantriebselement als ein oder das bereits zuvor genannte Detektionselement wenigstens eine Lochscheibe mit mehreren auf einer Kreisbahn angeordneten Durchtrittsöffnungen aufweist, wobei zur Erzeugung einer optischen Wirkverbindung durch die Durchtrittsöffnungen ein durch wenigstens eine Lichtquelle erzeugter Lichtstrahl zu wenigstens einem Empfänger hindurchleitbar ist, insbesondere wenn die Lochscheibe so verdreht vorliegt, dass eine Durchtrittsöffnung zwischen der Lichtquelle und dem Empfänger vorliegt. Somit kann/können zumindest eine spezielle Gabellichtschranke, vorzugsweise zwei phasenverschobene Gabellichtschranken ausgebildet werden.

Gemäß einer weiteren vorteilhaften Ausgestaltung der Erfindung, kann es vorgesehen sein, dass das Handantriebselement als ein oder das bereits zuvor genannte Detektionselement wenigstens eine Leiterschleife aufweist. Insbesondere kann die Leiterschleife als ebene, also archimedische Spirale ausgestaltet sein. Zwischen dem Sensor und der Leiterschleife kann somit eine induktive Wirkverbindung ausbildbar oder ausgebildet sein.

Damit ein Benutzer während eines manuellen Betätigungsvorgangs des Ventils die nötige Kraft aufbringen kann und/oder um den Benutzer den manuellen Betätigungsvorgang des Ventils zu erleichtern, kann zwischen einer oder der bereits zuvor genannten Abtriebswelle des Stellantriebs und dem Handantriebselement ein Getriebe angeordnet sein. Somit kann mittels des Getriebes eine durch einen Benutzer auf das Handantriebselement aufgebrachte Kraft und/oder ein aufgebrachtes Drehmoment übersetzt und auf die Abtriebswelle übertragen werden.

Um dennoch eine einfache und zuverlässige Eingabe von Befehlen mittels des Handantriebselements zu ermöglichen, kann der wenigstens eine Sensor und/oder ein oder das wenigstens eine Detektionselement zwischen dem Getriebe und dem Handantriebselement angeordnet sein.

Stellantriebe weisen in der Regel eine Vielzahl von sich relativ schnell bewegenden Teilen auf, was zu einem hohen Verletzungsrisiko und einer erheblichen Geräuschbelastung für einen Benutzer oder umstehender Personen führen kann. Der Großteil der Komponenten eines Stellantriebes ist daher mit einem Gehäuse abgedeckt. Durch das Gehäuse kann außerdem der Einfluss von Schmutz, Feuchtigkeit und Staub auf die darin angeordneten Komponenten verringert werden. Um die Fertigungskosten eines Gehäuses zu reduzieren, wird allgemein versucht, möglichst wenige Durchbrüche und/oder Öffnungen am Gehäuse auszubilden, die dann in der Regel nämlich relativ aufwendig abgedichtet werden müssen. Daher kann gemäß einer weiteren vorteilhaften Weiterbildung vorgesehen sein, dass der Stellantrieb ein Gehäuse aufweist, wobei eine Bedienelement bedingte Gehäuseöffnung nur für das Handantriebselement und/oder eine oder die bereits genannte weitere Eingabeeinheit vorgesehen ist. Dies hat den Vorteil, dass eine Anzahl von für Bedienelemente des Stellantriebs vorgesehene Gehäuseöffnungen gegenüber vorbekannten Stellantrieben deutlich reduzierbar ist, was die Anzahl an Öffnungen insgesamt und somit auch die Fertigungskosten reduziert sowie die Abdichtbarkeit des Gehäuses vereinfacht.

Damit ein Benutzer erfühlen kann, wie weit das Handantriebselement, insbesondere im Bedienmodus, verstellt wurde, kann gemäß einer weiteren vorteilhaften Weiterbildungen vorgesehen sein, dass der Stellantrieb eine Rasteinrichtung aufweist, durch welche eine Bewegung des Handantriebselements für einen Benutzer, insbesondere stufenweise, haptisch erfassbar ist. Vorzugsweise kann die Rasteinrichtung federbeaufschlagte Druckelemente aufweisen, die beispielsweise in regelmäßigen Abständen auf einer Kreisbahn angeordnet sind. Die Druckelemente können insbesondere als Kugeln und/oder Zylinder und/oder Kegel ausgestaltet sein.

Um eine möglichst einfache Betätigung des Handantriebselements zu ermöglichen, kann es als ein Handrad ausgestaltet sein.

Gemäß einer weiteren vorteilhaften Ausgestaltung kann der Sensor innerhalb eines oder des bereits zuvor genannten Gehäuses des Stellantriebes angeordnet sein. Dies hat den Vorteil, dass kein Kabeldurchbruch im Gehäuse zum Anschluss des Sensors erforderlich ist. Somit kann eine noch einfachere und bessere Abdichtung des Gehäuses erreicht werden.

Alternativ oder ergänzend dazu kann es weiter vorgesehen sein, dass das Handantriebselement außerhalb eines oder des Gehäuses des Stellantriebes angeordnet ist.

Um eine Fehlbedienung des Stellantriebes besser vermeiden zu können, kann gemäß einer weiteren vorteilhaften Ausgestaltung des Stellantriebes, in einem ausgekuppelten Zustand des Handantriebselements ein oder das bereits zuvor genannte wenigstens eine Detektionselement in einem Erfassungsbereich des Sensors liegen. Insbesondere kann somit im ausgekuppelten Zustand des Handantriebselements eine oder die bereits zuvor genannte Wirkverbindung zwischen dem Sensor und dem Detektionselement eingerichtet sein. In einem eingekuppelten Zustand des Handantriebselements kann hingegen ein oder das bereits zuvor genannte wenigstens eine Detektionselement außerhalb des Erfassungsbereichs des wenigstens einen Sensors liegen. Insbesondere kann somit im eingekuppelten Zustand des Handantriebselements eine Wirkverbindung zwischen dem Sensor und Detektionselement aufgehoben sein, insbesondere also keine Wirkverbindung eingerichtet sein.

Die oben genannte Aufgabe kann weiter durch die Merkmale des unabhängigen Verfahrensanspruchs gelöst werden. Insbesondere wird dabei ein Verfahren der eingangs genannten Art vorgeschlagen, wobei eine Drehbewegung eines Handantriebselements zur Ausführung eines Befehls erfasst wird, insbesondere mittels eines Sensors erfasst wird, wobei das Handantriebselement zusätzlich zur Übertragung einer Betätigungskraft auf eine Abtriebswelle und/oder das Ventils vorgesehen ist.

Das erfindungsgemäße Verfahren eignet sich insbesondere zur Bedienung eines Stellantriebes, wie er hierin beschrieben und beansprucht ist. Aus diesem Grund können sämtliche hierin in Bezug auf den Stellantrieb offenbarten Merkmale auch auf das Verfahren Anwendung finden.

Gemäß einer vorteilhaften Weiterbildung des Verfahrens kann es vorgesehen sein, dass während einer Eingabe eines Befehls keine Kraftübertragung vom Handantriebselement auf eine Abtriebswelle des Stellantriebes möglich ist. Wie bereits zuvor in Bezug auf den Stellantrieb ausgeführt wurde, kann dadurch das Verletzungsrisiko für einen Benutzer und ein Risiko einer Fehlbedienung des Stellantriebes reduziert werden.

Alternativ oder ergänzend kann es vorgesehen sein, dass während der Kraftübertragung vom Handantriebselement auf die Abtriebswelle des Stellantriebes keine Eingabe eines Befehls möglich ist. Somit kann verhindert werden, dass unerwünschter Weise Befehle eingegeben werden, während an sich nur eine manuelle Betätigung des Ventils durchgeführt werden soll.

Zur Lösung der oben genannte Aufgabe wird zudem eine Verwendung eines entkoppelten Handantriebselements eines Stellantriebes, insbesondere des Stellantriebes, wie er hierin beschrieben und beansprucht ist, zur Bedienung des Stellantriebes vorgeschlagen, wobei das Handantriebselement zusätzlich zur Übertragung einer Betätigungskraft auf eine Abtriebswelle und/oder das Ventils vorgesehen ist.

Die Erfindung betrifft also einen Stellantrieb zum Betätigen eines Stellglieds eines Ventils, mit einer Motorantriebseinheit zum motorischen Betätigen des Stellglieds und einem Handantriebselement zur manuellen Handbetätigung des Stellglieds, wobei eine mit dem Stellglied in eine Wirkverbindung versetzbare oder versetzte Abtriebswelle des Stellantriebes wahlweise mit der Motorantriebseinheit oder dem Handantriebselement betätigbar ist, und wobei der Stellantrieb wenigstens einen Sensor aufweist, mit dem eine, insbesondere während des Mototorantriebsmodus vorgenommene, Drehbewegung des Handantriebselements um eine Drehachse erfassbar ist.

Nachfolgend sind mehrere Ausführungsbeispiele der Erfindung anhand der Figuren näher beschrieben. Die Erfindung ist jedoch nicht auf diese Ausführungsbeispiele beschränkt. Weitere Ausführungsbeispiele ergeben sich durch die Kombination der Merkmale einzelner oder mehrerer Ansprüche untereinander und/oder mit einzelnen oder mehreren Merkmalen der Ausführungsbeispiele.

Es zeigen in teilweise stark schematisierter Darstellung:
- Fig. 1: eine Vorderansicht eines möglichen Ausführungsbeispiels eines Stellantriebs mit einem magnetischen 3D-Hallsensor zur Erfassung einer Drehbewegung einer Handantriebswelle eines Handantriebselements, wobei das Handantriebselement entkuppelt ist, dafür allerdings eine Wirkverbindung zwischen dem Sensor und dem Detektionselement besteht, wobei das Detektionselement als ein Stabmagnet ausgestaltet ist,
- Fig. 1a: das Handantriebselement aus Fig. 1, wobei das Detektionselement hier als ein Ringmagnet ausgestaltet ist,
- Fig. 2: eine Vorderansicht einer möglichen Ausführungsform eines induktiven Sensors und des dazugehörigen, als spiralförmige Leiterschleife ausgebildeten Detektionselements, das an der Handantriebswelle des Handantriebselements angeordnet ist,
- Fig. 3a: eine Vorderansicht einer möglichen Ausführungsform eines optischen Sensors und des dazugehörigen Detektionselements, das als kreisrunde Lochscheibe mit einer Vielzahl von in regelmäßigen Abständen auf einer Kreisbahn angeordneten Durchtrittsöffnungen ausgebildet ist und an der Handantriebswelle des Handantriebselements angeordnet ist,
- Fig. 3b: eine Seitenansicht des optischen Sensors und des dazugehörigen Detektionselements aus Fig. 3a,
- Fig. 4a: eine Vorderansicht einer weiteren möglichen Ausführungsform eines optischen Sensors und der dazugehörigen Detektionselemente, die jeweils als Reflektoren ausgebildet sind und in regelmäßigen Abständen auf einer auf der Handantriebswelle angeordneten kreisförmigen Scheibe angeordnet sind,
- Fig. 4b: eine Seitenansicht des optischen Sensors und des dazugehörigen Detektionselements aus Fig. 4a,
- Fig. 5: eine Vorderansicht einer möglichen Ausführungsform eines magnetischen Sensors, der als 3D-Hallsensor ausgestaltet ist, und des dazugehörigen Detektionselements, das als Ringmagnet ausgebildet und auf der Handantriebswelle angeordnet ist,
- Fig. 6: eine Vorderansicht einer weiteren möglichen Ausführungsform eines magnetischen Sensors, der als 3D-Hallsensor ausgestaltet ist, und des dazugehörigen Detektionselements, das als Stabmagnet ausgebildet und auf der Handantriebswelle angeordnet ist.

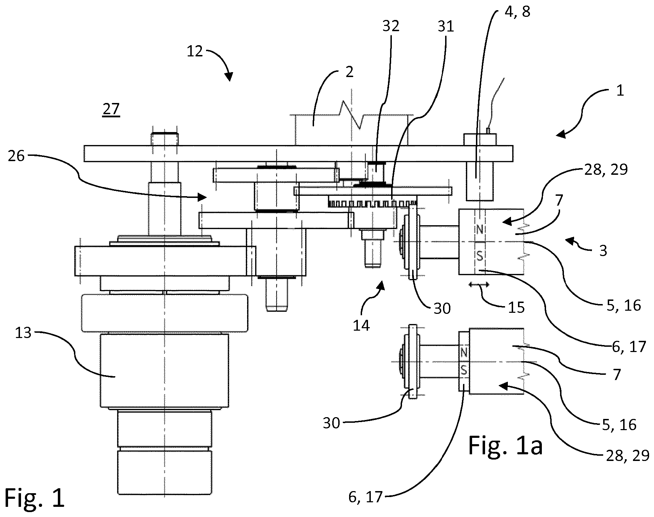

In Figur 1 ist ein im Ganzen mit 1 bezeichneter Stellantrieb zur Betätigung eines Ventils gezeigt. Mittels des Stellantriebs 1 kann ein Ventil zwischen einer Offen- und einer Verschlussposition bewegt werden.

Der Stellantrieb 1 weist dazu eine Motorantriebseinheit 2 auf, mittels welcher eine motorische Verstellung eines Stellglieds des Ventils durchführbar ist. Dazu muss zwischen dem Stellantrieb 1 und dem Stellglied des Ventils eine Wirkverbindung eingerichtet werden. Die Motorantriebseinheit 2 kann beispielsweise als ein Elektromotor ausgestaltet sein. Der Stellantrieb weist außerdem ein Handantriebselement 3 auf, welches alternativ zur Betätigung des Ventils anstelle der Motorantriebseinheit 2 einsetzbar ist.

Der Stellantrieb 1 weist weiter wenigstens einen Sensor 4 auf, mit welchem eine Drehbewegung des Handantriebselements detektierbar ist. Das Handantriebselement 3 weist eine Handantriebswelle 7 auf, die mit einem Detektionselement 6 verbunden ist und/oder auf welcher Handantriebswelle 7 eine Detektionselement 6 angeordnet ist.

Neben der zuvor genannten Drehbewegung des Handantriebselements 3 kann mittels des Sensors 4 und/oder mittels eines weiteren Sensors 4 eine Bewegung des Handantriebselements 3 in axialer Richtung 15 entlang einer Längsachse 16 des Handantriebselements 3 und/oder der Handantriebswelle 7 detektiert werden. Somit sind mittels des Sensors 4 und/oder mittels des weiteren Sensors 4 Bewegungen in allen drei Raumachsen (X, Y, Z) detektierbar.

Es kann jedoch ebenso vorgesehen sein, dass zur Erkennung einer Bewegung für jede Raumachse jeweils ein Sensor zugeordnet ist. Ebenso kann es vorgesehen sein, dass zur Erfassung der Drehbewegung ein Sensor 4 und zur Erfassung der Axialbewegung ein weiterer Sensor 4 vorgesehen ist.

Bei der in den Figuren 1, 1a, 5 und 6 gezeigten Ausführungsform ist das zuvor erwähnte Detektionselement 6 jeweils als ein Magnet 17 ausgebildet und der Sensor 4 als ein magnetischer 3D-Hallsensor 8. Durch die Ausgestaltung des Sensors 4 als magnetischer 3D-Hallsensor 8 ist es möglich, mittels eines einzelnen Sensors 4 Bewegungen in allen drei Raumachsen zu detektieren.

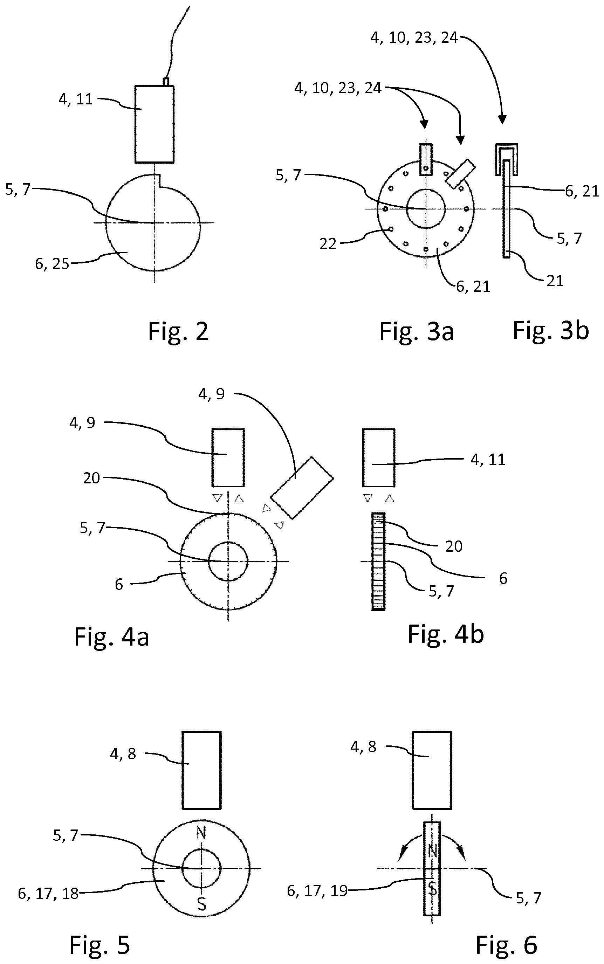

Alternativ oder ergänzend zu der Ausgestaltungsform gemäß den Figuren 1, 1a, 5 und 6 kann der Stellantrieb 1 auch andere Sensortypen aufweisen, wie beispielsweise wenigstens einen optischen Sensor 9, 10 (vgl. Figuren 3a, 3b, 4a und 4b) und/oder einen induktiven Sensor 11 (vgl. Figur 2). Die Beispiele dieser weiteren Sensortypen aus den Figuren 2 bis 6 sind nachfolgend genauer beschrieben. Die Erfindung ist jedoch nicht auf diese Sensortypen beschränkt.

Allgemein kann jedoch gesagt werden, dass zwischen dem Sensor 4 und dem Detektionselement 6 jeweils eine Wirkverbindung eingerichtet ist. Diese Wirkverbindung kann sich somit auf eine magnetische, optische und/oder induktive Wirkverbindung beziehen. Mittels der eingerichteten Wirkverbindung können durch den jeweiligen Sensor 4 Bewegungen des Handantriebselements detektiert und mittels einer Rechnereinheit 12 zu einem Befehl interpretiert werden.

Bei einer Bewegung des Handantriebselements 3 wird das wenigstens eine Detektionselement 6 zusammen mit der Handantriebswelle 7 mitbewegt. Im Falle der Verwendung eines magnetischen Sensors 4 ist es zweckmäßig, wenn die Handantriebswelle 7 aus einem nicht magnetischen und/oder nicht magnetisierbaren Material herstellt ist, so dass es zu keiner Störung bei der Erfassung der Bewegungen durch den Sensor 4, 8 kommt.

Ein Benutzer kann also durch eine Betätigung des Handantriebselements 3 Befehle, beispielsweise zur Steuerung der Motorantriebseinheit 2, und/oder Parameter eingeben. Eine Quittierung oder Bestätigung der eingegebenen Befehle kann dabei anschließend durch eine vordefinierte Bewegung, vorzugsweise durch eine axiale Bewegung 15, des Handantriebselements 3 erfolgen. Dabei kann es auch vorgesehen sein, dass der Stellantrieb 1 eine Anzeigeeinheit aufweist, mittels welcher ein Eingabefeld und/oder ein Auswahlmenü anzeigbar ist/sind, das über das Handantriebselement 3 bedienbar und/oder in das so Werte eintragbar sind.

Der Magnet 17 kann, wie in Figur 5 gezeigt ist, als ein Ringmagnet 18 und/oder, wie in Figur 6 gezeigt ist, als ein Stabmagnet 19 ausgestaltet sein. Vorzugsweise handelt es sich bei dem Magnet 17 um einen Permanentmagnet.

Der Stellantrieb 1 weist eine Kupplungsvorrichtung 14 auf, die zwischen einer Abtriebswelle 13 des Stellantriebs 1 und der Handantriebswelle 7 angeordnet ist. Die Kupplungsvorrichtung 14 kann beispielsweise mechanisch ausgestaltet sein. Eine mögliche Ausführungsform einer Kupplungsvorrichtung 14 ist in den Figuren 1 und 1a gezeigt. Hierbei handelt es sich um eine formschlüssige Kupplungsvorrichtung 14 mit einem Stirnrad 30, welches Stirnrad 30 mit der Handantriebswelle 7 verbunden ist und in eingekuppelten Zustand in Wirkverbindung mit einem Kronrad 31 steht, wobei das Kronrad 31 mit einer Motorwelle 32 verbunden ist. Die Motorwelle 32 kann mittels der Motorantriebseinheit 2 angetrieben werden. Über das Getriebe 26 kann eine Kraftübertragung von der Motorwelle 32 auf die Abtriebswelle 13 erfolgen. Durch eine Betätigung des Handantriebselements 3 in eingekuppelten Zustand der Kupplungsvorrichtung 14 ist es somit möglich, eine Drehmoment- und/oder Kraftübertragung vom Handantriebselement 3 auf die Abtriebswelle 13 vorzunehmen. Die Abtriebswelle 13 kann außerdem im entkuppelten Zustand (vgl. Figur 1) mittels der Motorantriebseinheit 2 angetrieben werden. In diesem Fall besteht jedoch keine Wirkverbindung zwischen dem Stirnrad 30 und dem Kronrad 31, so dass sich während eines Motorbetriebes das Handantriebselement 3 nicht über die Motorantriebseinheit 2 mitantreiben lässt. Die Abtriebswelle 13 des Stellantriebs 1 kann in eine Wirkverbindung mit dem Ventil, insbesondere mit einem Stellglied des Ventils, gebracht werden oder steht in einer solchen Wirkverbindung mit dem Ventil, so dass das Ventil, insbesondere das Stellglied des Ventils, zwischen einer Offen- und einer Verschlussstellung mittels des Stellantriebes 1 verstellbar ist.

Allgemein kann daher gesagt werden, dass in einem ausgekuppelten Zustand des Handantriebselements 3 das wenigstens eine Detektionselement 6 in einem Erfassungsbereich des Sensors 4 angeordnet ist, so dass in diesem Zustand die Wirkverbindung zwischen dem Sensor 4 und dem Detektionselement 6 eingerichtet ist. Im Gegensatz dazu ist in einem eingekuppelten Zustand des Handantriebselements 3 das wenigstens eine Detektionselement 6 außerhalb des Erfassungsbereichs des Sensors 4 angeordnet, so dass in diesem Zustand die Wirkverbindung zwischen dem Sensor 4 und dem Detektionselement 6 aufgehoben ist.

Zwischen der Abtriebswelle 13 und der Handantriebswelle 7 ist ein Getriebe 26 angeordnet. Durch das Getriebe 26 ist eine Kraftübersetzung von der Motorantriebseinheit 2 und/oder vom Handantriebselement 3 auf die Abtriebswelle 13 möglich. Ein Benutzer kann somit das Ventil einfacher aufgrund des Getriebes 26 durch einen geringeren Kraftaufwand als ohne Verwendung eines Getriebes 26 mittels der Handantriebseinheit verstellen.

Der Stellantrieb 1 weist zudem ein Gehäuse 27 auf, in welchem die Motorantriebseinheit 2, der Sensor 4, das Getriebe 26, zumindest teilweise die Abtriebswelle 13, die Kupplungsvorrichtung 14 sowie zumindest teilweise die Handantriebswelle 7 eingehaust sind. Das Gehäuse 27 weist also lediglich einen durch ein Eingabeelement bedingten Durchbruch auf, um die Handantriebswelle 7 nach außen zu führen. Das Handantriebselement 3 ist somit außerhalb des Gehäuses 27 angeordnet. Dies ermöglicht es, das Gehäuse 27 relativ einfach und gut abzudichten, da in Bezug auf die Eingabeelemente im Vergleich zu vorbekannten Stellantrieben mit Tastaturen oder dergleichen eine kleinstmögliche Anzahl an dafür vorgesehenen Öffnungen realisierbar ist.

In Figur 1a ist die Handantriebswelle 7 in einem eingekuppeltem Zustand dargestellt, so dass eine Kraft- und/oder Drehmomentübertragung vom Handantriebselement 3 auf die Abtriebswelle 13 möglich ist. Das Handantriebselement 3 kann also zwischen einer Einkuppelposition und einer Auskuppelposition der Kupplungsvorrichtung 14 durch eine axiale Bewegung 15 des Handantriebselements 3 entlang der Längsachse 16 verstellt werden. Da das Detektionselement 6 gemeinsam mit der Handantriebswelle relativ zum Sensor 4, 8 in axialer Richtung 15 verstellt wird, ist im eingekuppelten Zustand des Handantriebselements 3 die Wirkverbindung zwischen dem Sensor 4 und dem Detektionselement 6 aufgehoben. In dieser Position ist also keine Erfassung der Drehbewegung des Handantriebselements durch den Sensor 4 mehr möglich. Allgemein kann somit gesagt werden, dass das Detektionselement 6 relativ zum Sensor 4 in seiner Position verstellbar ist.

In Figur 2 ist ein induktiver Sensor 4 mit einem dazugehörigen, als Leiterschleife 25 ausgebildeten Detektionselement 6 dargestellt. Das Detektionselement 6 kann dabei beispielsweise als eine ebene Spirale ausgestaltet sein.

In den Figuren 3a und 3b ist ein optischer Sensor 4 dargestellt, der als Gabellichtschranke 10 ausgebildet ist. Hierzu weist der ortsfeste Sensor 4 eine Lichtquelle 23 und einen Empfänger 24 auf. Die Lichtquelle 23 und der Empfänger 24 sind durch ein als Lochscheibe 21 ausgebildetes Detektionselement 6 voneinander getrennt. Die Lochscheibe 21 weist mehrere, als Löcher 22 ausgebildete Durchtrittsöffnungen auf, durch welche eine Lichtschranke zwischen der Lichtquelle 23 und dem Empfänger 24 ausbildbar ist. Bei einer Drehbewegung des Handantriebselements 3 wird daher die auf der Handantriebswelle 7 angeordnete Lochscheibe 21 mitgedreht, was zu einer phasenweisen Ausbildung einer Lichtschranke durch die auf einer in regelmäßigen Abständen zueinander in einer Kreisbahn angeordneten Durchtrittsöffnungen 22 ermöglicht wird. Die Ausführungsform der Figuren 3a und 3b weist daher zwei, zueinander phasenverschobene Sensoren 4 auf, um die Drehbewegung des Handantriebselements 3 genauer erfassen zu können. Dabei kann vorgesehen sein, dass die Ausbildung einer Lichtschranke nur durch jeweils einen der beiden Sensoren 4 möglich ist, da ein Winkel zwischen den einzelnen Durchtrittsöffnungen 22 der Lochscheibe 21 ungleich einem Winkel zwischen den beiden Sensoren 4 der Ausführungsform der Figuren 3a und 3b ist.

In den Figuren 4a und 4b ist eine weitere mögliche Ausführungsform eines optischen Sensors 4 dargestellt, wobei hier ebenfalls zwei phasenverschobene, in diesem Fall jedoch als Reflexlichtschranken 9 ausgebildete Sensoren 4 vorgesehen sind. Diese Ausführungsform weist mehrere, als Reflektoren 20 ausgestaltete Detektionselemente 6 auf, die auf einer Mantelfläche eines Grundkörper, insbesondere eines Zylinders, umlaufend und in regelmäßigen Abständen zueinander angeordnet sind.

Um einem Benutzer eine haptische Erfassung einer durch ihn vorgenommenen Drehbewegung am Handantriebselement 3 zu ermöglichen, weist der Stellantrieb eine Rasteinrichtung 28 mit mehreren, drucknachgebenden Druckelementen 29 auf. Durch die Rasteinrichtung 28 können mehrere Rastpositionen definiert sein. Um das Handantriebselement 3 aus einer Rastposition herausbewegen zu können, muss somit eine höhere Kraft als eine Summe der durch die Druckelemente 29 entwickelten Verrastungskräfte aufgebracht werden. Die Druckelemente 29 können dabei federbeaufschlagt sein. Ferner können sie beispielsweise als Kugeln und/oder Zylinder und/oder Kegel ausgestaltet sein. Die Druckelemente 29 können weiter in regelmäßigen Abständen zueinander auf einer Kreisbahn angeordnet sein, wobei der Abstand zwischen zwei Rastpositionen durch einen Abstand zwischen zwei benachbarten Druckelementen definiert sein kann.

Durch den Stellantrieb 1 ist also eine Möglichkeit geschaffen, ein Handantriebselement 3 nicht alleinig zur manuellen Verstellung eines Ventils zu verwenden, sondern das Handantriebselement 3 zusätzlich auch als ein Bedienelement zur Steuerung des Stellantriebes 1 einzurichten. Auf diese Weise ist es möglich, eine Funktion, die üblicherweise von Tastaturen, Tastelementen oder dergleichen Eingabeelementen übernommen wird, auf ein bereits vorhandenes Bauteil eines Stellantriebs 1 zu übertragen.

Dabei ist es besonders vorteilhaft, wenn die Generierung eines Befehls mittels des Handantriebselements 3 nur in einer ausgekuppelten Position der Kupplungsvorrichtung 14 möglich ist, wobei dabei das Handantriebselement 3 und/oder die Recheneinheit 12 in einen Bedienmodus übergeht. Das bedeutet, dass das Handantriebselement 3 in seinem eingekuppelten Zustand vorzugsweise ausschließlich zur Übertragung einer Kraft oder eines Drehmoments auf die Abtriebswelle 13 eingerichtet ist. Somit kann verhindert werden, dass während das Handantriebselement 3 im eingekoppelten Zustand, also einem Antriebsmodus, vorliegt, versehentlich Befehle durch einen Benutzer eingegeben werden.

Die Erfindung betrifft einen Stellantrieb mit den Merkmalen von Anspruch 1.

### Bezugszeichenliste

- 1: Stellantrieb
- 2: Motorantriebseinheit
- 3: Handantriebselement
- 4: Sensor
- 5: Drehachse
- 6: Detektionselement
- 7: Handantriebswelle
- 8: magnetischer 3D-Hallsensor
- 9: Reflexlichtschranke (optischer Sensor)
- 10: Gabellichtschranke (optischer Sensor)
- 11: induktiver Sensor
- 12: Recheneinheit
- 13: Abtriebswelle
- 14: Kupplungsvorrichtung
- 15: axiale Bewegung
- 16: Längsachse
- 17: Magnet
- 18: Ringmagnet
- 19: Stabmagnet
- 20: Reflektor
- 21: Lochscheibe
- 22: Loch/Durchtrittsöffnung
- 23: Lichtquelle
- 24: Empfänger
- 25: Leiterschleife
- 26: Getriebe
- 27: Gehäuse
- 28: Rasteinrichtung
- 29: Druckelement
- 30: Stirnrad
- 31: Kronrad
- 32: Motorwelle

## Patentansprüche

1. Stellantrieb (1) mit einer Abtriebswelle (13) zur Betätigung eines Ventils, mit einer Motorantriebseinheit (2) und mit einem Handantriebselement (3), wobei die Abtriebswelle (13) wahlweise mit der Motorantriebseinheit (2) oder dem Handantriebselement (3) betätigbar ist, wobei der Stellantrieb eine Kupplungsvorrichtung (14) aufweist, die zwischen der Abtriebswelle (13) und dem Handantriebselement (3) angeordnet ist,
**dadurch gekennzeichnet, dass** der Stellantrieb (1) wenigstens einen Sensor (4) aufweist, mit dem eine Drehbewegung des ausgekuppelten Handantriebselements (3) um eine Drehachse (5) erfassbar ist.

2. Stellantrieb (1) nach Anspruch 1, **dadurch gekennzeichnet, dass** mit dem wenigstens einen Sensor (4) und/oder mit wenigstens einem weiteren Sensor (4) zusätzlich eine axiale Bewegung (15) des ausgekuppelten Handantriebselements (3) entlang einer Längsachse (16) des Handantriebselements (3) erfassbar ist und/oder dass mittels des wenigstens einen Sensors (4) Bewegungen in drei Raumachsen erfassbar sind, vorzugsweise wobei zur Bewegungserfassung in jeder Raumachse jeweils wenigstens ein Sensor (4) vorgesehen ist.

3. Stellantrieb (1) nach Anspruch 1 oder 2, **dadurch gekennzeichnet, dass** zwischen wenigstens einem Detektionselement (6), welches an dem Handantriebselement (3) ausgebildet ist oder mit dem Handantriebselement (3) verbunden ist, insbesondere wobei das wenigstens eine Detektionselement (6) an einer, vorzugsweise nichtmagnetischen und/oder nicht-magnetisierbaren, Handantriebswelle (7) des Handantriebselement (3) angeordnet ist, und dem wenigstens einen Sensor (4) und/oder einem oder dem weiteren Sensor (4) eine Wirkverbindung eingerichtet ist, insbesondere wenigstens eine Wirkverbindung ausgewählt aus induktive, optische und/oder magnetische Wirkverbindung, vorzugsweise wobei bei einer Bewegung des ausgekuppelten Handantriebselements (3) das Detektionselement (6) mitbewegt wird.

4. Stellantrieb (1) nach einem der vorstehenden Ansprüche, **dadurch gekennzeichnet, dass** der wenigstens eine Sensor (4) und/oder ein oder der weitere Sensor (4) jeweils zur Durchführung einer Messungsart oder einer Kombination aus mehreren Messungsarten ausgewählt aus der Gruppe aus magnetische, optische und/oder induktive Messung eingerichtet ist und/oder dass der wenigstens eine Sensor (4) und/oder ein oder der weitere Sensor (4) jeweils zumindest als ein Sensor (4) ausgewählt aus der Gruppe aus magnetischer Hallsensor, insbesondere magnetischer 3D-Hallsensor (8), phasenverschobene Reflexlichtschranken (9), phasenverschobene Gabellichtschranken (10) und/oder induktiver Sensor (11) ausgestaltet ist/sind.

5. Stellantrieb (1) nach einem der vorstehenden Ansprüche, **dadurch gekennzeichnet, dass** der wenigstens eine Sensor (4) und/oder ein oder der weitere Sensor (4) mit einer Rechnereinheit (12) gekoppelt ist/sind, insbesondere elektronisch gekoppelt ist/sind, wobei durch Betätigung des ausgekoppelten Handantriebselements (3) ein Befehl, vorzugsweise eine Parametereinstellung und/oder ein Verstellungsbefehl, generierbar ist, insbesondere wobei die Rechnereinheit (12) mit der Motorantriebseinheit (2) gekoppelt ist, vorzugsweise elektronisch gekoppelt ist, und die Motorantriebseinheit (2) durch die Rechnereinheit (12) steuerbar ist.

6. Stellantrieb (1) nach einem der vorstehenden Ansprüche, **dadurch gekennzeichnet, dass** zwischen dem Handantriebselement (3), insbesondere zwischen einer oder der Handantriebswelle (7), und einer Abtriebswelle (13) des Stellantriebs (1) eine mechanische Kupplungsvorrichtung (14), angeordnet ist, und/oder dass eine Drehbewegung des Handantriebselements (3) nur bei ausgekuppeltem Handantriebselement (3) durch den wenigstens einen Sensor (4) erfassbar ist und/oder daraus ein Befehl generiert wird.

7. Stellantrieb (1) nach einem der vorstehenden Ansprüche, **dadurch gekennzeichnet, dass** eine durch den wenigstens einen Sensor (4) und/oder einen oder den weiteren Sensor (4) erfasste Bewegung des ausgekuppelten Handantriebselements (3), insbesondere eine axiale Bewegung (15) des Handantriebselements (3) entlang einer Längsachse (16), vorzugsweise bei einem Ein- oder Auskupplungsvorgang des Handantriebselements (3), durch eine oder die Rechnereinheit (12) als Bestätigungsbefehl für einen, insbesondere mittels einer Drehbewegung, ausgewählten oder eingegebenen Befehl interpretierbar ist und/oder dass der Stellantrieb (1) eine weitere Eingabeeinheit, insbesondere zumindest eine Taste, aufweist, wobei durch Betätigen der Eingabeeinheit ein Bestätigungsbefehl für einen, insbesondere mittels einer Drehbewegung, ausgewählten oder eingegebenen Befehl generierbar ist.

8. Stellantrieb (1) nach einem der vorstehenden Ansprüche, **dadurch gekennzeichnet, dass** das Handantriebselement (3) als ein oder das Detektionselement (6) wenigstens einen Magneten (17) aufweist oder mit wenigstens einem Magneten (17) verbunden ist, wobei zwischen dem wenigstens einen Magnet (17) und dem wenigstens einem Sensor (4) und/oder dem weiteren Sensor (4) eine magnetische Wirkverbindung einrichtbar oder eingerichtet ist, über welche eine Bewegung des Handantriebselements (3), insbesondere eine Bewegung in den drei Raumachsen, erfassbar ist, vorzugsweise wobei der wenigstens eine Magnet (17) als Ringmagnet (18) und/oder als Stabmagnet (19) ausgestaltet ist.

9. Stellantrieb (1) nach einem der vorstehenden Ansprüche, **dadurch gekennzeichnet, dass** das Handantriebselement (3) als ein oder das Detektionselement (6) wenigstens einen Reflektor (20) aufweist oder mit wenigstens einem Reflektor (20) verbunden ist, vorzugsweise dass das Handantriebselement (3) wenigstens zwei um einen Phasenwinkel verschobene Reflektoren (20) aufweist, über welche/n jeweils eine als Lichtschranke ausgebildete optische Wirkverbindung zu jeweils einem Sensor (4) einrichtbar oder eingerichtet ist.

10. Stellantrieb (1) nach einem der vorstehenden Ansprüche, **dadurch gekennzeichnet, dass** das Handantriebselement (7) als ein oder das Detektionselement (6) wenigstens eine Lochscheibe (21) mit mehreren auf einer Kreisbahn angeordnete Durchtrittsöffnungen (22) aufweist, wobei zur Erzeugung einer optischen Wirkverbindung durch die Durchtrittsöffnungen (22) ein durch wenigstens eine Lichtquelle (23) erzeugter Lichtstrahl zu wenigstens einem Empfänger (24) hindurchleitbar ist.

11. Stellantrieb (1) nach einem der vorstehenden Ansprüche, **dadurch gekennzeichnet, dass** das Handantriebselement (3) als Detektionselement (6) wenigstens eine Leiterschleife (25) aufweist, insbesondere dass die Leiterschleife (25) als ebene Spirale ausgestaltet ist, wobei zwischen dem Sensor (4) und der Leiterschleife (25) eine induktive Wirkverbindung ausgestaltet ist.

12. Stellantrieb (1) nach einem der vorstehenden Ansprüche, **dadurch gekennzeichnet, dass** zwischen einer oder der Abtriebswelle (13) des Stellantriebs (1) und dem Handantriebselement (3) ein Getriebe (26) angeordnet ist, vorzugsweise wobei der wenigstens eine Sensor (4) und/oder ein oder das wenigstens eine Detektionselement (6) zwischen dem Getriebe (26) und dem Handantriebselement (7) angeordnet ist/sind.

13. Stellantrieb (1) nach einem der vorstehenden Ansprüche, **dadurch gekennzeichnet, dass** der Stellantrieb (1) eine Rasteinrichtung (28) aufweist, durch welche eine Bewegung des ausgekuppelten Handantriebselements (3) für einen Benutzer, insbesondere stufenweise, haptisch erfassbar ist, vorzugsweise wobei die Rasteinrichtung (28) federbeaufschlagte Druckelemente (29), insbesondere Kugeln und/oder Zylinder und/oder Kegel, aufweist, und/oder dass das Handantriebselement (3) als ein Handrad ausgestaltet ist.

14. Stellantrieb (1) nach einem der vorstehenden Ansprüche, **dadurch gekennzeichnet, dass** der wenigstens eine Sensor (4) innerhalb eines oder des Gehäuses (27) des Stellantriebes (1) angeordnet ist und/oder dass das Handantriebselement (3) außerhalb eines oder des Gehäuses (27) des Stellantriebes (1) angeordnet ist.

15. Stellantrieb (1) nach einem der vorstehenden Ansprüche, **dadurch gekennzeichnet, dass** in einem ausgekuppelten Zustand des Handantriebselements (3) ein oder das wenigstens eine Detektionselement (6) in einem Erfassungsbereich des Sensors (4) liegt, insbesondere wobei in diesem Zustand eine oder die Wirkverbindung zwischen dem Sensor (4) und dem Detektionselement (6) eingerichtet ist, und dass in einem eingekuppelten Zustand des Handantriebselements (3) ein oder das wenigstens eine Detektionselement (6) außerhalb des Erfassungsbereichs des Sensors (4) liegt, insbesondere wobei in diesem Zustand eine oder die Wirkverbindung zwischen dem Sensor (4) und dem Detektionselement (6) aufgehoben ist.

16. Verfahren zur Bedienung eines Stellantriebes (1) nach einem der vorstehenden Ansprüche, wobei eine Drehbewegung des ausgekuppelten Handantriebselements (3) zur Ausführung eines Befehls, insbesondere mittels des wenigstens einen Sensors (4), erfasst wird, wobei das eingekuppelte Handantriebselement (3) zusätzlich zur Übertragung einer Betätigungskraft auf die Abtriebswelle (13) und/oder das Ventil vorgesehen ist.

17. Verfahren nach Anspruch 16, **dadurch gekennzeichnet, dass** während der Eingabe des Befehls keine Kraftübertragung vom ausgekuppelten Handantriebselement (3) auf die Abtriebswelle (13) des Stellantriebes (1) möglich ist und/oder dass während der Kraftübertragung vom eingekuppelten Handantriebselement (3) auf die Abtriebswelle (13) des Stellantriebes (1) keine Eingabe eines Befehls möglich ist.

## Claims

1. Actuating drive (1) with an output shaft (13) for actuating a valve, with a motor drive unit (2) and with a manual drive element (3), wherein the output shaft (13) can be optionally actuated using the motor drive unit (2) or the manual drive element (3), wherein the actuating drive has a coupling device (14) which is arranged between the output shaft (13) and the manual drive element (3), **characterized in that** the actuating drive (1) comprises at least one sensor (4), using which a rotational movement of the decoupled manual drive element (3) around a rotary axis (5) can be detected.

2. Actuating drive (1) according to Claim 1, **characterized in that**, additionally, an axial movement (15) of the decoupled manual drive element (3) along a longitudinal axis (16) of the manual drive element (3) is detectable using the at least one sensor (4) and/or using at least one other sensor (4) and/or **in that**, by means of the at least one sensor (4), movements in three spatial axes are detectable, wherein, preferably, at least one sensor (4) is respectively provided for detecting movement in each spatial axis.

3. Actuating drive (1) according to Claim 1 or 2, **characterized in that** an operative connection is established between the at least one sensor (4) and/or a or the other sensor (4) and at least one detection element (6), which is formed on the manual drive element (3) or is connected to the manual drive element (3), in particular, wherein the at least one detection element (6) is arranged on a preferably non-magnetic and/or non-magnetizable manual drive shaft (7) of the manual drive element (3), in particular at least an operative connection selected out of an inductive, optical and/or magnetic operative connection, preferably wherein, during a movement of the decoupled manual drive element (3), the detection element (6) is moved along therewith.

4. Actuating drive (1) according to one of the preceding claims, **characterized in that** the at least one sensor (4) and/or a or the other sensor (4) is respectively set up to carry out a measurement type or a combination of a plurality of measurement types selected from the group of magnetic, optical and/or inductive measurement and/or **in that** the at least one sensor (4) and/or a or the other sensor (4) is/are respectively designed at least as a sensor (4) selected from the group of magnetic Hall sensor, in particular magnetic 3D Hall sensor (8), phase-shifted reflex photoelectric sensors (9), phase-shifted forked photoelectric sensors (10) and/or inductive sensor (11).

5. Actuating drive (1) according to one of the preceding claims, **characterized in that** the at least one sensor (4) and/or a or the other sensor (4) is/are coupled, in particular electronically coupled, to a computing unit (12), wherein, by actuating the decoupled manual drive element (3), a command, preferably a parameter setting and/or an adjustment command, can be generated, in particular, wherein the computing unit (12) is coupled, preferably electronically coupled, to the motor drive unit (2) and the motor drive unit (2) can be controlled by the computing unit (12).

6. Actuating drive (1) according to one of the preceding claims, **characterized in that**, between the manual drive element (3), in particular between a or the manual drive shaft (7), and an output shaft (13) of the actuating drive (1), a mechanical coupling device (14) is arranged, and/or **in that** a rotational movement of the manual drive element (3) is only detectable in the case of a decoupled manual drive element (3) by the at least one sensor (4) and/or a command is generated from it.

7. Actuating drive (1) according to one of the preceding claims, **characterized in that** a movement of the decoupled manual drive element (3) detected by the at least one sensor (4) and/or a or the other sensor (4), in particular an axial movement (15) of the manual drive element (3) along a longitudinal axis (16), preferably in the case of a coupling or decoupling process of the manual drive element (3), can be interpreted by a or the computing unit (12) as a confirmation command for a command, in particular, that has been input or selected by means of a rotational movement and/or **in that** the actuating drive (1) comprises another input unit, in particular at least a button, wherein a confirmation command for a command that has been input or selected by means of a rotational movement in particular can be generated due to actuation of the input unit.

8. Actuating drive (1) according to one of the preceding claims, **characterized in that** the manual drive element (3) comprises at least one magnet (17) as a or the detection element (6) or is connected to at least one magnet (17), wherein a magnetic operative connection can be established or is established between the at least one magnet (17) and the at least one sensor (4) and/or the other sensor (4), via which a movement of the manual drive element (3) is detectable, in particular a movement in the three spatial axes, wherein, preferably, the at least one magnet (17) is designed as a ring magnet (18) and/or as a rod magnet (19).

9. Actuating drive (1) according to one of the preceding claims, **characterized in that** the manual drive element (3) comprises at least one reflector (20) as a or the detection element (6) or is connected to at least one reflector (20), preferably **in that** the manual drive element (3) comprises at least two reflectors (20) shifted by a phase angle, via which an optical operative connection, designed as a photoelectric sensor, to a respective sensor (4) can be established or is established respectively.

10. Actuating drive (1) according to one of the preceding claims, **characterized in that** the manual drive element (7) comprises at least one perforated disk (21) as a or the detection element (6) with a plurality of openings (22) arranged on a circular path, wherein a light beam generated by at least one light source (23) can be guided through the openings (22) to at least one receiver (24) for generating an optical operative connection.

11. Actuating drive (1) according to one of the preceding claims, **characterized in that** the manual drive element (3) comprises at least one conductor loop (25) as a detection element (6), in particular **in that** the conductor loop (25) is designed as a level spiral, wherein an inductive operative connection is designed between the sensor (4) and the conductor loop (25).

12. Actuating drive (1) according to one of the preceding claims, **characterized in that**, between an or the output shaft (13) of the actuating drive (1) and the manual drive element (3), a gearbox (26) is arranged, preferably wherein the at least one sensor (4) and/or a or the at least one detection element (6) is/are arranged between the gearbox (26) and the manual drive element (7) .

13. Actuating drive (1) according to one of the preceding claims, **characterized in that** the actuating drive (1) comprises a snap-in locking device (28), by means of which a movement of the decoupled manual drive element (3) is detectable in a haptic manner, especially in a stepwise manner, for a user, preferably wherein the snap-in locking device (28) comprises spring-loaded pressure elements (29), in particular balls and/or cylinders and/or cones, and/or **in that** the manual drive element (3) is designed as a handwheel.

14. Actuating drive (1) according to one of the preceding claims, **characterized in that** the at least one sensor (4) is arranged within a or the housing (27) of the actuating drive (1) and/or **in that** the manual drive element (3) is arranged outside of a or the housing (27) of the actuating drive (1).

15. Actuating drive (1) according to one of the preceding claims, **characterized in that**, in a decoupled state of the manual drive element (3), a or the at least one detection element (6) is in a detection region of the sensor (4), in particular wherein in this state, a or the operative connection is established between the sensor (4) and the detection element (6), and **in that**, in a coupled state of the manual drive element (3), a or the at least one detection element (6) is outside of the detection region of the sensor (4), in particular wherein, in this state, a or the operative connection between the sensor (4) and the detection element (6) is eliminated.

16. Method for the operation of an actuating drive (1) according to one of the preceding claims, wherein a rotational movement of the decoupled manual drive element (3) is detected, in particular by means of the at least one sensor (4), for carrying out a command, wherein the coupled manual drive element (3) is additionally provided for transmitting an actuating force to the output shaft (13) and/or the valve.

17. Method according to Claim 16, **characterized in that** no power transmission from the decoupled manual drive element (3) to the output shaft (13) of the actuating drive (1) is possible during the input of the command and/or **in that** no input of a command is possible during the power transmission from the coupled manual drive element (3) to the output shaft (13) of the actuating drive (1).

## Revendications

1. Actionneur (1) pourvu d'un arbre de sortie (13) pour actionner une vanne, d'une unité d'actionnement motorisée (2) et d'un élément d'actionnement manuel (3), l'arbre de sortie (13) pouvant être actionné au choix avec l'unité d'actionnement motorisée (2) ou l'élément d'actionnement manuel (3), lequel actionneur comporte un dispositif d'accouplement (14) qui est agencé entre l'arbre de sortie (13) et l'élément d'actionnement manuel (3),
**caractérisé en ce que** cet actionneur (1) comporte au moins un capteur (4) avec lequel un mouvement de rotation de l'élément d'actionnement manuel (3) désaccouplé autour d'un axe de rotation (5) peut être détecté.

2. Actionneur (1) selon la revendication 1, **caractérisé en ce qu'**un mouvement axial (15) de l'élément d'actionnement manuel (3) désaccouplé le long d'un axe longitudinal (16) de l'élément d'actionnement manuel (3) peut en outre être détecté avec l'au moins un capteur (4) et/ou avec au moins un autre capteur (4) et/ou que des mouvements sur trois axes spatiaux peuvent être détectés au moyen de l'au moins un capteur (4), au moins un capteur (4) étant de préférence prévu pour la détection de mouvement sur chaque axe spatial.

3. Actionneur (1) selon la revendication 1 ou 2, **caractérisé en ce qu'**une connexion active est établie entre au moins un élément de détection (6) qui est formé sur l'élément d'actionnement manuel (3) ou est relié à l'élément d'actionnement manuel (3), l'au moins un élément de détection (6) étant en particulier agencé sur un arbre d'actionnement (7) de préférence non magnétique et/ou non magnétisable de l'élément d'actionnement manuel (3), et l'au moins un capteur (4) et/ou un ou l'autre capteur (4), en particulier au moins une connexion active choisie parmi des connexions actives inductive, optique et/ou magnétique, l'élément de détection (6) étant de préférence également mu lors d'un mouvement de l'élément d'actionnement manuel (3) désaccouplé.

4. Actionneur (1) selon une des revendications précédentes, **caractérisé en ce que** l'au moins un capteur (4) et/ou un ou l'autre capteur (4) sont équipés chacun pour effectuer un type de mesure ou une combinaison de plusieurs types de mesure choisis parmi le groupe comprenant les mesures magnétique, optique et/ou inductive et/ou que l'au moins un capteur (4) et/ou un ou l'autre capteur (4) sont conçus chacun comme un capteur (4) sélectionné parmi le groupe comprenant un capteur Hall magnétique, en particulier un capteur Hall magnétique 3D (8), des barrières lumineuses à réflexion à décalage de phase (9), des barrières lumineuses à fourche à décalage de phase (10) et/ou un capteur inductif (11).

5. Actionneur (1) selon une des revendications précédentes, **caractérisé en ce que** l'au moins un capteur (4) et/ou un ou l'autre capteur (4) est/sont accouplé(s), en particulier est/sont accouplé(s) électroniquement, avec un processeur (12), une instruction, de préférence un réglage de paramètre et/ou une instruction d'ajustement, pouvant être générée par l'activation de l'élément d'actionnement manuel (3) désaccouplé, en particulier le processeur (12) étant accouplé, de préférence accouplé électroniquement, avec l'unité d'actionnement motorisée (2) et l'unité d'actionnement motorisée (2) pouvant être contrôlée par le processeur (12).

6. Actionneur (1) selon une des revendications précédentes, **caractérisé en ce qu'**un dispositif d'accouplement mécanique (14) est agencé entre l'élément d'actionnement manuel (3), en particulier entre un ou l'arbre d'actionnement manuel (7), et un arbre de sortie (13) de l'actionneur (1), et/ou qu'un mouvement de rotation de l'élément d'actionnement manuel (3) ne peut être détecté par l'au moins un capteur (4) et/ou une instruction ne peut être générée que lorsque l'élément d'actionnement manuel (3) est désaccouplé.

7. Actionneur (1) selon une des revendications précédentes, **caractérisé en ce qu'**un mouvement de l'élément d'actionnement manuel (3) désaccouplé détecté par l'au moins un capteur (4) et/ou un ou l'autre capteur (4), en particulier un mouvement axial (15) de l'élément d'actionnement manuel (3) le long d'un axe longitudinal (16), de préférence lors d'un processus d'accouplement ou de désaccouplement de l'élément d'actionnement manuel (3), peut être interprété par un ou le processeur (12) comme une instruction d'activation pour une instruction sélectionnée ou entrée, en particulier par le biais d'un mouvement de rotation, et/ou que l'actionneur (1) comporte une autre unité d'entrée, en particulier au moins une touche, une instruction de confirmation d'une instruction sélectionnée ou entrée, en particulier par le biais d'un mouvement de rotation, pouvant être générée par l'activation de cette unité d'entrée.

8. Actionneur (1) selon une des revendications précédentes, **caractérisé en ce que** l'élément d'actionnement manuel (3) comprend au moins un aimant (17) faisant office d'élément de détection (6) ou est relié avec au moins un aimant (17), une connexion active magnétique, par le biais de laquelle un mouvement de l'élément d'actionnement manuel (3), en particulier un mouvement sur les trois axes spatiaux, peut être détectée, pouvant être établie ou étant établie entre l'au moins un aimant (17) et l'au moins un capteur (4) et/ou l'autre capteur (4), de préférence l'au moins un aimant(17) étant configuré comme un anneau magnétique (18) et/ou comme une barre magnétique (19).

9. Actionneur (1) selon une des revendications précédentes, **caractérisé en ce que** l'élément d'actionnement manuel (3) comprend au moins un réflecteur (20) faisant office d'élément de détection (6) ou est relié avec au moins un réflecteur (20), de préférence **en ce que** l'élément d'actionnement manuel (3) comprend au moins deux réflecteurs (20) décalés d'un angle de phase, par le biais de chacun desquels une connexion active optique configurée comme une barrière lumineuse peut être établie ou est établie avec un capteur (4).

10. Actionneur (1) selon une des revendications précédentes, **caractérisé en ce que** l'élément d'actionnement manuel (7) comprend en guise d'élément de détection (6) au moins un disque perforé (21) pourvu de plusieurs ouvertures de passage (22) disposées sur une trajectoire circulaire, un faisceau lumineux généré par au moins une source lumineuse (23) pouvant être envoyé à au moins un récepteur (24) pour établir une connexion active optique à travers les ouvertures de passage (22).

11. Actionneur (1) selon une des revendications précédentes, **caractérisé en ce que** l'élément d'actionnement manuel (3) comprend au moins une boucle conductrice (25) faisant office d'élément de détection (6), en particulier **en ce que** cette boucle conductrice (25) est configurée comme une spirale plane, une connexion active inductive étant établie entre le capteur (4) et la boucle conductrice (25).

12. Actionneur (1) selon une des revendications précédentes, **caractérisé en ce qu'**une transmission (26) est agencée entre un ou l'arbre de sortie (13) de l'actionneur (1) et l'élément d'actionnement manuel (3), de préférence l'au moins un capteur (4) et/ou un ou l'au moins un élément de détection (6) étant agencé(s) entre la transmission (26) et l'élément d'actionnement manuel (3).

13. Actionneur (1) selon une des revendications précédentes, **caractérisé en ce que** cet actionneur (1) comporte un dispositif d'encliquetage (28) par le biais duquel un mouvement de l'élément d'actionnement manuel (3) désaccouplé peut être détecté tactilement, en particulier graduellement, pour un utilisateur, ce dispositif d'encliquetage (28) comportant de préférence des éléments de pression sollicités par ressort (29), en particulier des sphères et/ou des cylindres et/ou des cônes, et/ou que l'élément d'actionnement manuel (3) est configuré comme un volant.

14. Actionneur (1) selon une des revendications précédentes, **caractérisé en ce que** l'au moins un capteur (4) est agencé à l'intérieur d'un ou du boîtier (27) de l'actionneur (1) et/ou que l'élément d'actionnement manuel (3) est agencé à l'extérieur d'un ou du boîtier (27) de l'actionneur.

15. Actionneur (1) selon une des revendications précédentes, **caractérisé en ce que**, lorsque l'élément d'actionnement manuel (3) est désaccouplé, un ou l'au moins un élément de détection (6) se trouve dans une zone de détection du capteur (4), en particulier une ou la connexion active étant établie entre le capteur (4) et l'élément d'actionnement manuel (3) dans cette configuration, et que, lorsque l'élément d'actionnement manuel (3) est accouplé, un ou l'au moins un élément de détection (6) se trouve en dehors de la zone de détection du capteur (4), en particulier une ou la connexion active étant supprimée entre le capteur (4) et l'élément d'actionnement manuel (3) dans cette configuration.

16. Procédé de fonctionnement d'un actionneur (1) selon une des revendications précédentes, selon lequel un mouvement de rotation de l'élément d'actionnement manuel (3) désaccouplé est détecté, en particulier au moyen de l'au moins un capteur (4), pour l'exécution d'une instruction, l'élément d'actionnement manuel (3) accouplé étant en outre prévu pour la transmission d'une force d'activation à l'arbre de sortie (13) et/ou à la vanne.

17. Procédé selon la revendication 16, **caractérisé en ce qu'**aucune transmission de force de l'élément d'actionnement manuel (3) désaccouplé à l'arbre de sortie (13) de l'actionneur (1) n'est possible pendant l'entrée de l'instruction et/ou qu'aucune entrée d'une instruction n'est possible pendant la transmission de force de l'élément d'actionnement manuel (3) accouplé à l'arbre de sortie (13) de l'actionneur (1).
